(19) **Europäisches Patentamt / European Patent Office / Office européen des brevets**

(11) **EP 4 765 979 A1**

(12) **EUROPEAN PATENT APPLICATION**
published in accordance with Art. 153(4) EPC

(43) Date of publication:
**24.06.2026 Bulletin 2026/26**

(21) Application number: **23949668.0**

(22) Date of filing: **18.08.2023**

(51) International Patent Classification (IPC):
**H04W 72/0453** (2023.01)    **H04W 16/28** (2009.01)
**H04W 72/20** (2023.01)

(52) Cooperative Patent Classification (CPC):
**H04W 16/28; H04W 72/0453; H04W 72/20**

(86) International application number:
**PCT/JP2023/029894**

(87) International publication number:
**WO 2025/041206 (27.02.2025 Gazette 2025/09)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **NTT DOCOMO, INC.**
**Tokyo 100-6150 (JP)**

(72) Inventors:
• **ECHIGO, Haruhi**
**Tokyo 100-6150 (JP)**

• **MATSUMURA, Yuki**
**Tokyo 100-6150 (JP)**
• **SHIMA, Kousuke**
**Tokyo 100-6150 (JP)**
• **OKAMURA, Masaya**
**Tokyo 100-6150 (JP)**
• **NAGATA, Satoshi**
**Tokyo 100-6150 (JP)**

(74) Representative: **Hoffmann Eitle**
**Patent- und Rechtsanwälte PartmbB**
**Arabellastraße 30**
**81925 München (DE)**

(54) **TERMINAL, WIRELESS COMMUNICATION METHOD, AND BASE STATION**

(57)    A terminal according to one aspect of the present disclosure includes: a control section that decides a control channel element (CCE) index corresponding to a candidate for a physical downlink control channel (PDCCH) using multiple layers, based on a first derivation method related to the CCE index, the first derivation method being different from a second derivation method related to a CCE index corresponding to a candidate for a PDCCH using one layer; and a receiving section that monitors the PDCCH using the multiple layers, based on the CCE index. According to one aspect of the present disclosure, resource efficiency can be improved.

FIG.2A  frequency

PDCCH candidate for UE#1

PDCCH candidate for UE#2

SS#1    SS#2    SS#1    time

EP 4 765 979 A1

FIG.2B  frequency

PDCCH candidate
for UE#1

PDCCH candidate
for UE#2

SS#1          SS#2          SS#1

time

**Description**

Technical Field

The present disclosure relates to a terminal, a radio communication method, and a base station in next-generation mobile communication systems.

Background Art

In a Universal Mobile Telecommunications System (UMTS) network, the specifications of Long Term Evolution (LTE) have been drafted for the purpose of further increasing high speed data rates, providing lower latency and so on (Non-Patent Literature 1). In addition, for the purpose of further high capacity, advancement and the like of LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

Citation List

Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

Summary of Invention

Technical Problem

In future radio communication systems (for example, NR), for example, it is studied, from the viewpoint of improving resource efficiency, to increase the capacity of a downlink control channel.

However, a concrete method for this has not been sufficiently studied. Unless this study is sufficient, improvement of resource efficiency may be prevented, which may suppress an increase in communication throughput.

Thus, an object of the present disclosure is to provide a terminal, a radio communication method, and a base station that can improve resource efficiency.

Solution to Problem

A terminal according to one aspect of the present disclosure includes: a control section that decides a control channel element (CCE) index corresponding to a candidate for a physical downlink control channel (PDCCH) using multiple layers, based on a first derivation method related to the CCE index, the first derivation method being different from a second derivation method related to a CCE index corresponding to a candidate for a PDCCH using one layer; and a receiving section that monitors the PDCCH using the multiple layers, based on the CCE index.

Advantageous Effects of Invention

According to one aspect of the present disclosure, resource efficiency can be improved.

Brief Description of Drawings

[FIG. 1] FIG. 1A is a diagram to show an example of the number of UEs to be accommodated per slot/symbol for each channel. FIG. 1B is a diagram to show an example of the number of UEs to be accommodated per cell for each channel.
[FIG. 2] FIG. 2A and FIG. 2B are diagrams to show an example of overlapping of resources of PDCCH candidates.
[FIG. 3] FIG. 3 is a diagram to show an example of PDCCH DMRSs to which FD-OCC is applied.
[FIG. 4] FIG. 4 is a diagram to show another example of the PDCCH DMRSs to which FD-OCC is applied.

[FIG. 5] FIG. 5 is a diagram to show another example of the PDCCH DMRSs to which FD-OCC is applied.

[FIG. 6] FIG. 6 is a diagram to show an example of PDCCH DMRSs to which TD-OCC is applied.

[FIG. 7] FIG. 7 is a diagram to show another example of the PDCCH DMRSs to which TD-OCC is applied.

[FIG. 8] FIG. 8 is a diagram to show an example of PDCCH DMRSs to which FD-OCC and TD-OCC are applied.

[FIG. 9] FIG. 9 is a diagram to show another example of the PDCCH DMRSs to which FD-OCC and TD-OCC are applied.

[FIG. 10] FIG. 10 is a diagram to show an example of PDCCH DMRSs to which FDM is applied.

[FIG. 11] FIG. 11 is a diagram to show another example of the PDCCH DMRSs to which FDM is applied.

[FIG. 12] FIG. 12 is a diagram to show an example of PDCCH DMRSs to which TDM is applied.

[FIG. 13] FIG. 13 is a diagram to show another example of the PDCCH DMRSs to which TDM is applied.

[FIG. 14] FIG. 14 is a diagram to show an example of a schematic structure of a radio communication system according to one embodiment.

[FIG. 15] FIG. 15 is a diagram to show an example of a structure of a base station according to one embodiment.

[FIG. 16] FIG. 16 is a diagram to show an example of a structure of a user terminal according to one embodiment.

[FIG. 17] FIG. 17 is a diagram to show an example of a hardware structure of the base station and the user terminal according to one embodiment.

[FIG. 18] FIG. 18 is a diagram to show an example of a vehicle according to one embodiment.

Description of Embodiments

(Minimum Quality Guarantee in Future Radio Communication System)

In existing radio communication systems (for example, Rel. 15 to Rel. 17), mobile communication using a public network is generally so-called best-effort communication.

In such communication, there is a feature that the communication carrier cannot control an instantaneous increase in traffic amount. For example, in a dense environment such as a concert/stadium, when traffic instantaneously/explosively increases, there is a problem that minimum communication is not secured (for example, a phone call cannot be made, a web cannot be browsed, and the like).

In existing radio communication systems (for example, Rel. 15 to Rel. 17), mission-critical use cases (for example, Ultra-Reliable and Low Latency Communications (URLLC)) have been studied.

However, in a case where a mission-critical communication service is performed in a public network, when peripheral traffic increases as described above, or when traffic in a mission-critical communication service increases, it is conceivable that desired communication quality (for example, throughput/delay/the number of simultaneous connections, or the like) cannot be achieved.

Hence, in future radio communication systems, a mechanism capable of ensuring the lowest communication quality is desired even for general users and even in mission-critical use cases.

However, it is difficult to guarantee the minimum quality in finite resources.

For example, if the number of temporary users is unknown, it is difficult to guarantee the minimum quality for all users using finite resources.

In addition, since the minimum quality that can be ensured varies depending on the performance/type of a device/terminal, it is difficult to guarantee the minimum quality that can achieve a key performance indicator (KPI) of a service required by any user.

In addition, since the radio communication quality may change every moment due to various factors, it is difficult to always ensure a specific performance KPI (for example, throughput/reliability).

It is also difficult to ensure a specific quality in any place due to factors such as a limit on the number of base stations/transmission/reception points that can be deployed or a surrounding communication environment.

As a method for performing minimum quality guarantee for many terminals (user terminals, User Equipments (UEs)), it is conceivable to simultaneously schedule data channels (for example, PDSCHs/PUSCHs) for many UEs.

Hereinafter, an example of calculating the number of multiplexed UEs in FR1 (particularly, a case with data transmission periodicity of 20 ms and data size (transport block size) $\geq$ 320 in required throughput (12.65 kbps) of VoLTE (Voice over LTE)) will be described.

The calculation conditions are as follows:

- Band configuration: FR1, 100 MHz, subcarrier spacing = 30 kHz.
- TDD configuration: DDDSUUDDDD (periodicity of 5ms, D denotes a DL slot, U denotes a UL slot, and S denotes a special slot (for simplification, only a PDCCH can be transmitted)).
- PDCCH: Symbol #0 or symbols #0 to #1 are used. The number of bits of DCI is 40. An aggregation level at which the coding rate (CodeRate) is equal to or lower than that of the PDSCH.

- PDSCH: as mapping pattern 1, symbol length of 13 symbols and DMRS of 2 symbols (non-data multiplexing). As mapping pattern 2, symbol lengths of 12 symbols and DMRS of 2 symbols (non-data multiplexing).
- PUSCH: symbol length of 14 symbols and DMRS of 2 symbols (non-data multiplexing).
- Other reference signals (RSs)/channels are not considered.

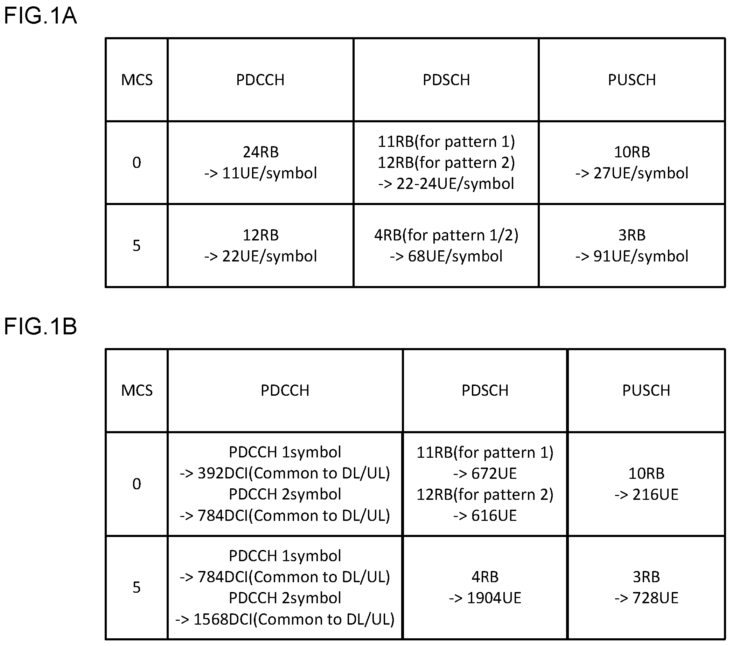

FIG. 1A is a diagram to show an example of the number of UEs to be accommodated per slot/symbol for each channel. FIG. 1A shows an example where the number of UEs to be accommodated per slot for each channel is calculated based on the number of RBs.

Under the above conditions, when the number of UEs to be accommodated for a PDCCH per symbol is calculated, 24 resource blocks (RBs) are required per UE in a case of modulation and coding scheme (MCS) index 0, and thus 11 is calculated as the number of UEs to be accommodated. 12 RBs are required per UE in a case of MCS index 5, and thus 22 is calculated as the number of UEs to be accommodated.

Similarly, when the number of UEs to be accommodated for a PDSCH per slot is calculated, 11 RBs are required per UE for pattern 1, and 12 RBs are required per UE for pattern 2, in a case of MCS index 0, 22 to 24 are calculated as the number of UEs to be accommodated. 4 RBs are required per UE for patterns 1 and 2 in a case of MCS index 5, and thus 68 is calculated as the number of UEs to be accommodated.

Further, when the number of UEs to be accommodated for PUSCHs per slot is calculated, 10 RBs are required per UE in a case of MCS index 0, and thus 27 is calculated as the number of UEs to be accommodated. 3 RBs are required per UE in a case of MCS index 5, and thus 91 is calculated as the number of UEs to be accommodated.

FIG. 1B is a diagram to show an example of the number of UEs to be accommodated per cell for each channel. FIG. 1B shows an example where the number of UEs to be accommodated per slot for each channel (the number of pieces of DCI for PDCCH) is calculated based on a TDD configuration.

When the number for PDCCH/DCI per cell is calculated under the above conditions, 392 pieces of DCI (UL DCI and DL DCI) can be accommodated for a 1-symbol PDCCH, and 784 pieces of DCI (UL DCI and DL DCI) can be accommodated for a 2-symbol PDCCH, in a case of MCS index 0. 784 pieces of DCI (UL DCI and DL DCI) can be accommodated for a 1-symbol PDCCH, and 1568 pieces of DCI (UL DCI and DL DCI) can be accommodated for a 2-symbol PDCCH, in a case of MCS index 5.

Similarly, when the number of UEs to be accommodated for PDSCHs per cell is calculated, 11 RBs are required per UE for pattern 1 in a case of MCS index 0, and hence 672 is calculated as the number of UEs to be accommodated, and 12 RBs are required per UE for pattern 2 in a case of MCS index 0, and hence 616 is calculated as the number of UEs to be accommodated. 4 RBs are required per UE for patterns 1 and 2 in a case of MCS index 5, and hence 1904 is calculated as the number of UEs to be accommodated.

Further, when the number of UEs to be accommodated for PUSCHs per cell is calculated, 10 RBs are required per UE in a case of MCS index 0, and hence 216 is calculated as the number of UEs to be accommodated. 3 RBs are required per UE in a case of MCS index 5, and thus 728 is calculated as the number of UEs to be accommodated.

In this way, in the assumption of the required throughput of VoLTE, even in a TDD configuration where DL resources are more than UL resources, it is possible to allocate PUSCHs for the maximum of 216 UEs (in a case of MCS index 0) per slot.

In order to schedule PUSCHs for 216 UEs, it is necessary to transmit a control channel(s) (for example, a PDCCH(s)/pieces of DCI) for scheduling the PUSCHs in one or more DL slots.

As mentioned above, the number for PDCCH/DCI per cell is at least about 400, which is considered sufficiently large.

However, this is merely an example of a case where a PDCCH/pieces of DCI can be transmitted in a manner of filling all the PDCCH resources. In actual transmission, due to PDCCH overbooking, a base station cannot simultaneously transmit as many PDCCHs as the calculated number described above. In other words, when the resources of PDCCH candidates overlap in the time domain among the UEs, a state where a PDCCH cannot be transmitted occurs.

(PDCCH Candidates)

In an existing radio communication system (NR of Rel. 15 to 17 or previous versions), a CCE index corresponding to a PDCCH candidate in CORESET: p, aggregation level: L, and search space: s is determined based on the following expression (hash function):

$$L \cdot \left\{ \left( Y_{p,n_{s,f}^{\mu}} + \left\lceil \frac{m_{s,n_{CI}}^{(L)} \cdot N_{CCE,p}}{L \cdot M_{s,max}^{(L)}} \right\rceil + n_{CI} \right) \bmod \lfloor N_{CCE,p}/L \rfloor \right\} + i$$

<div align="right">(Expression 1)</div>

Here, $N_{CCE,p}$ denotes the number of CCEs in CORESETp. $n_{CI}$ denotes a carrier indicator field value. $M_{s,n\_CI}^{(L)}$ is the number of PDCCH candidates configured to be monitored for search space s and aggregation level L of the serving cell corresponding to $n_{CI}$, and $m_{s,n\_CI}^{(L)}$ denotes a value from 0 to $M_{s,n\_CI}^{(L)}$.

Further, $Y_{p,n^{\mu}\_s,f}$ denotes a value determined based on at least one of the type, the RNTI, and the slot number of search space, and $Y_{p,n^{\mu}\_s,f} = 0$ holds in a case of CSS.

In a case of USS, $Y_{p,n^{\mu}\_s,f}$ is determined based on the following expression.

$$Y_{p,n_{s,f}^{\mu}} = \left( A_p \cdot Y_{p,n_{s,f}^{\mu}-1} \right) \bmod D$$

<div align="right">(Equation 2)</div>

Here, $Y_{p,-1}$, which is an initial value of $Y_{p,n^{\mu}\_s,f}$, denotes the value of a C-RNTI ($n_{RNTI}$). $A_p$ is 39827 when the remainder obtained by dividing p by 3 (p mod 3) is 0, is 39829 when the remainder obtained by dividing p by 3 is 1, and is 39839 when the remainder obtained by dividing p by 3 is 2. D is 65537.

In other words, according to the above expression, in the case of USS, a CCE index to be a PDCCH candidate is different for each UE and for each slot.

According to this calculation method, it is possible to make the most of frequency diversity for each UE and also randomize interference between cells, but it is difficult to perform scheduling so that resources to be PDCCH candidates overlap between specific UEs.

This is because $Y_{n,n^{\mu}\_s,f}$ is determined based on CORESET index/$Y_{p,-1}$, the value of a C-RNTI (for example, any value from 0 to 65535) is likely to be different for each UE, and $Y_{p,-1}$, which is the initial value of $Y_{p,n^{\mu}\_s,f}$, is basically different for each UE, and thus it is difficult that $Y_{p,n^{\mu}\_s,f}$ is the same value for each of a plurality of UEs (plurality of UEs with low spatial correlation).

In other words, it is difficult that a CCE index is the same value for each of a plurality of UEs (plurality of UEs with low spatial correlation), and thus difficult that PDCCH candidate resources for the plurality of UEs (plurality of UEs with low spatial correlation) overlap.

In expression 1 above in the existing specification, CCE indices to be PDCCH candidates vary depending on the number of CCEs, the number of PDCCHs to be monitored (the number of candidates), and the value of an RNTI. The number of CCEs is determined based on the number of RBs/number of symbols of a CORESET. The number of CCEs is determined based on the number of RBs/number of symbols of the CORESET.

In an existing specification, a CCE index is assigned to each REG bundle. In a case where each REG bundle is interleaved, PRBs to be monitored are determined based on a shift index (shiftIndex ($n_{shift}$)) related to the interleave, interleaver size (interleaverSize (R)), and a bundle size of REG (reg-BundleSize (L)).

Hence, when the CCE indices are desired to be dynamically changed as will be described later, at least one of the number of CCEs, the number of PDCCHs to be monitored, and an RNTI value need be dynamically changed.

(Analysis)

As described above, as a method for performing minimum quality guarantee, a technique for improving frequency/space utilization efficiency for allocating a PDCCH capable of accommodating more UEs by using limited resources in order to simultaneously schedule data channels (for example, PDSCHs/PUSCHs) for many UEs is desired. In other words, a method of increasing PDCCH capacity is desired as a method for performing minimum quality guarantee.

As more concrete methods, a technique/method for performing communication at a low data rate even when resources that can be allocated to one UE are few, a technique/method for improving the frequency utilization efficiency of resources (for example, spatial multiplexing of channels/signals), and the like are desired.

It is preferable to increase PDCCH capacity, also from the general viewpoint of improvement in resource efficiency in future radio communication systems.

For example, when multilayer/port is used for a PDCCH (for example, when multi-user (MU-)MIMO is used for a PDCCH), UEs with low spatial correlation need share at least one or some of the PDCCH candidates (resources of the PDCCH candidates).

For example, when the spatial correlation between UE #1 and UE #2 is low, it is preferable that scheduling is possible so that at least a part of the resources of the PDCCH candidates overlap in all/specific search spaces/CORESETs.

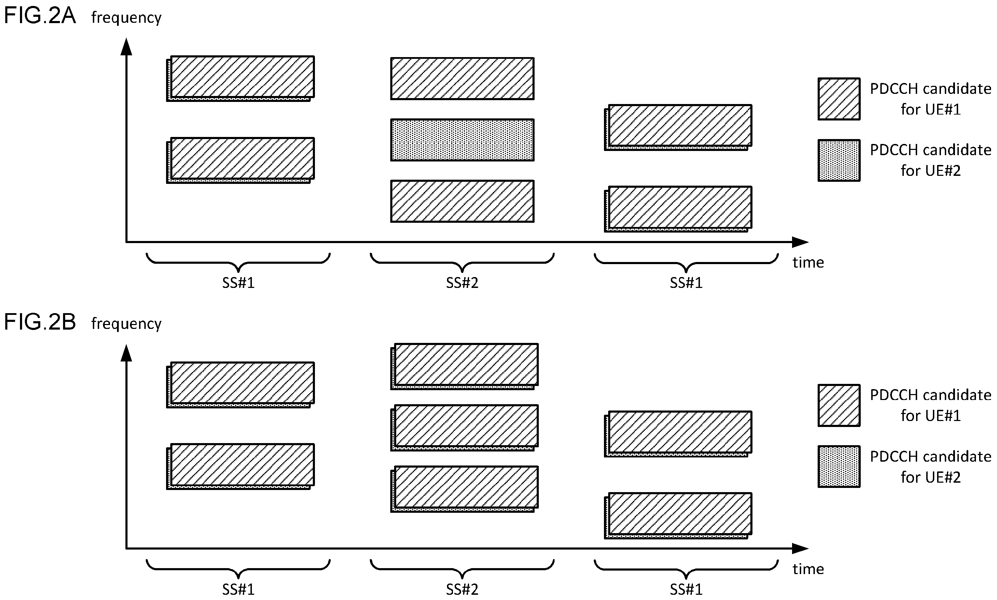

FIG. 2A shows an example where the resources of PDCCH candidates overlap in a specific search space/CORESET (SS #1 in the example shown in FIG. 2A) for a plurality of UEs (UE #1 and UE #2).

FIG. 2B shows an example where the resources of PDCCH candidates overlap in all search spaces/CORESETs (SS #1 and SS #2 in the example shown in FIG. 2B) for a plurality of UEs (UE #1 and UE #2).

However, as described above, when PDCCH candidate resources are determined based on a hash function defined in an existing specification, it is difficult to configure the PDCCH candidate resources for a plurality of UEs (plurality of UEs with low spatial correlation) to overlap. Hence, a method for configuring the resources of PDCCH candidates for a plurality of UEs to overlap is desired.

However, such a method is not sufficiently studied. Unless this study is sufficient, the minimum quality guarantee of communication cannot be ensured, which may suppress an increase in communication throughput.

Thus, the inventors of the present invention came up with the idea of a method for solving the above problem.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, notify, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, other messages (for example, a message from the core network, such as positioning protocol (for example, NR Positioning Protocol A (NRPPa)/LTE Positioning Protocol (LPP)) messages), and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, drop, stop, cancel, puncture, rate match, postpone, not transmit, and the like may be interchangeably interpreted.

(Radio Communication Method)

UEs may receive a PDCCH by using more than one rank/layer.

By receiving the PDCCH by using multiple ranks/layers, it is possible to reduce frequency resources (for example, aggregation level) for transmitting the PDCCH at a required coding rate, and improve the multiplexing capacity/accommodation amount (PDCCH capacity) of UEs.

Each embodiment of the present disclosure may be applied only when a specific parameter/field is configured by using higher layer signaling (for example, RRC signaling/MAC CE).

For example, the number of layers/number of ranks for reception of a PDCCH may be configured for UEs by using higher layer signaling, and the UE may receive DCI by using the configured number of layers/number of ranks.

For example, the maximum number of layers/maximum number of ranks for receiving a PDCCH may be configured for a UE by using higher layer signaling, and the UE may receive DCI by using the number of layers/number of ranks smaller than the configured maximum number of layers/maximum number of ranks.

The configuration by higher layer signaling may be performed, for example, for each search space/each CORESET/each BWP/each CC/each band/each UE.

Each embodiment of the present disclosure may be applied only when specific UE capability information (supporting of specific UE capability) is reported.

The UE capability information may be reported, for example, for each band, for each band combination (BC), for each band in a BC, or for each CC in a BC (per CC per band in BC).

Embodiments of the present disclosure may be applied for a specific search space (SS)/SS set.

The specific SS/SS set may be, for example, a UE-specific search space (USS) or a specific common search space (CSS, for example, Type 3 CSS). With this configuration, for example, a configuration excluding the CSS for a plurality of UEs of Type 0/0A/1/2 CSS can be obtained.

Each embodiment of the present disclosure may be applied to (PDCCH that transmits) a specific DCI format.

The specific DCI format may be, for example, a DCI format other than a group-common DCI format (for example, DCI format 2_x (x is any integer)) and a DCI format for multicast/broadcast (for example, DCI format 4_x (x is any integer)). With this configuration, it is possible to obtain a configuration excluding DCI formats for a plurality of UEs.

The specific DCI format may be, for example, at least one of a group-common DCI format (for example, DCI format 2_x (x is any integer)) and a DCI format for multicast/broadcast (for example, DCI format 4_x (x is any integer)).

Embodiments of the present disclosure may be applicable for a specific time resource (for example, slot/symbol).

The specific time resource may be, for example, a DL/UL/special slot (or symbol).

Each embodiment of the present disclosure may be applied, for example, to a specific BWP/CC.

For example, the specific BWP/CC may be a BWP/CC of a PCell/PSCell/SpCell or may be a BWP/CC of an SCell, for example.

In each embodiment of the present disclosure, terms such as "precoding," a "precoder," "weight (precoding weight)," "quasi-co-location (QCL)," a "Transmission Configuration Indication state (TCI state)," a "spatial relation," a "spatial domain filter," a "transmission power," "phase rotation," an "antenna port," a "layer," "the number of layers," a "rank," a "resource," a "resource set," a "beam," a "beam width," a "beam angle," an "antenna," an "antenna element," a "panel," a "UE panel," a "transmission entity," a "reception entity," and the like may be interchangeably interpreted.

In each embodiment of the present disclosure, MIMO (Multi Input Multi Output), multilayer, and multiport may be interchangeably interpreted.

Each embodiment of the present disclosure may be, for example, operation for MIMO by a plurality of UEs (multi-user (MU-)MIMO). In the present disclosure, MU-MIMO may mean transmission/reception of a signal/channel using multilayer/port/rank in which at least a part of time/space resources overlap among a plurality of UEs.

In each embodiment of the present disclosure, MU-MIMO, PDCCH-MIMO, transmission/reception using a multilayer/port, a PDCCH of multilayer/port, and transmission/reception using multiple (two or more) ports/port numbers/port indices may be interchangeably interpreted.

In each embodiment of the present disclosure, a PDCCH resource of a certain UE and a PDCCH resource of another UE may overlap in a specific search space/CORESET.

The overlap of resources for a plurality of UEs may be partial overlap of the resources or entire overlap of the resources.

In the present disclosure, a CCE index to be a PDCCH candidate, a CCE index corresponding to a PDCCH candidate, and a CCE index of a PDCCH candidate may be interchangeably interpreted.

<First Embodiment>

A first embodiment relates to derivation of a CCE index to be a PDCCH candidate.

The first embodiment is broadly classified into embodiments 1-1 and 1-2. A UE/base station may apply either embodiment 1-1 or 1-2 or may apply embodiments 1-1 and 1-2 in combination.

<<Embodiment 1-1>>

The UE may derive/identify a CCE index to be a PDCCH candidate, based on a specific expression/method/rule.

The specific expression/method/rule may be, for example, an expression (second expression) different from expression 1 above.

The second expression need not be determined based on at least one of a specific radio network temporary identifier (RNTI), a CORESET index, and a search space. In other words, the second expression need not include at least one of a term associated with the specific RNTI, a term associated with the CORESET index, and a term associated with the search space.

<<Embodiment 1-2>>

The second expression may be different in a specific term (for example, $Y_{p,n^{\mu}\_s,f}$) included in expression 1 above. The second expression need not include a specific term (for example, $Y_{p,n^{\mu}\_s,f}$) included in expression 1 above and may include a different term (for example, $Y'_{p,n^{\mu}\_s,f}$).

In the second expression, the different term may be a term not based on at least one of the value of a specific RNTI (for example, a C-RNTI), a CORESET index, and a search space.

In the second expression, the different term may be a term not depending on (not based on) a slot.

According to the first embodiment, it is possible to achieve overlap of the resources of PDCCH candidates for a plurality of UEs by not using an existing method of deriving a CCE index.

<Second Embodiment>

A second embodiment relates to derivation of the "different term (for example, $Y'_{p,n^\mu\_s,f}$)" according to the first embodiment.

$Y'_{p,n^\mu\_s,f}$ may be defined by a recursion formula based on a specific time resource (for example, a symbol/slot). In other words, $Y'_{p,n^\mu\_s,f}$ may be derived based on $Y'_{p,(n^\mu\_s,f)-1}$.

The second embodiment is broadly classified into embodiments 2-1 to 2-3. A UE/base station may apply any of embodiments 2-1 to 2-3 or may apply at least two of embodiments 2-1 to 2-3 in combination.

<<Embodiment 2-1>>

$Y'_{p,n^\mu\_s,f}$ may be determined based on an initial value (for example, $Y'_{p,-1}$) corresponding to slot number 0.

For example, the UE may determine the initial value, based on a parameter configured/indicated according to at least one method described in supplement 1 below.

For example, the UE may determine the initial value, based on at least one of a specific RNTI value and the parameter.

For example, the UE may calculate a value obtained by subjecting the specific RNTI value to addition/subtraction/multiplication/division with a specific RNTI value.

For example, the UE may decide the parameter as the initial value.

For example, the UE may be configured/indicated with the specific RNTI to determine a CCE index to be a PDCCH candidate. The UE may determine the initial value, based on the specific RNTI value.

An RNTI (first RNTI) used for calculating the PDCCH candidate (CCE index to be the PDCCH candidate) and an RNTI (second RNTI) used for detecting a PDCCH may be separately defined.

For example, the first RNTI may be a group-common RNTI (for example, a G (Group-RNTI, a G-CS (Configured Scheduling-RNTI), a new RNTI, or a UE-specific RNTI (for example, a C (Cell)-RNTI, a CS-RNTI). For example, the second RNTI may be a UE-specific RNTI (for example, a C-RNTI, a CS-RNTI) or a group-common RNTI (for example, a G-RNTI, a G-CS-RNTI).

For example, the UE may determine the CCE index of the PDCCH candidate, based on the first RNTI, and detect a CRC-scrambled PDCCH, based on the second RNTI. With this configuration, it is possible to flexibly change the position of a PDCCH candidate without updating/reconfiguring an RNTI value used for detection.

Each of the first RNTI and the second RNTI may be configured by using higher layer signaling (RRC/MAC CE) or may be determined based on a predefined rule.

The UE may assume that the first RNTI is commonly assigned to a plurality of UEs in a cell and assume that the second RNTI is not assigned to other UEs in the cell (is UE-specific).

The UE may assume that the first RNTI is not assigned to other UEs in a cell (is UE-specific) and assume that the second RNTI is commonly allocated to a plurality of UEs in the cell.

<<Embodiment 2-2>>

$Y'_{p,n^\mu\_s,f}$ may be determined based on a term (for example, $A'_p$) related to a CORESET index.

For example, $Y'_{p,n^\mu\_s,f}$ may be determined based on $A'_p * Y'_{p,(n^\mu\_s,f)-1}$.

For example, the UE may determine this $A'_p$, based on a parameter configured/indicated according to at least one method described in supplement 1 below.

For example, the UE may determine $A'_p$, based on at least one of a CORESET index and the parameter.

For example, the UE may determine $A'_p$, based on a value obtained by subjecting the CORESET index to addition/subtraction/multiplication/division with the parameter.

For example, the UE may determine, as $A'_p$, a remainder obtained by subjecting the CORESET index to addition/subtraction/multiplication/division with the parameter and further dividing a thus obtained value by 3.

For example, the UE may decide the parameter as $A'_p$.

<<Embodiment 2-3>>

$Y'_{p,n^\mu\_s,f}$ may be determined based on a specific term (for example, D').

For example, $Y'_{p,n^{\mu}\_s,f}$ may be defined as a remainder $((A'_p * Y'_{p,(n^{\mu}\_s,f)-1}) \bmod D')$ obtained by dividing $A'_p * Y'_{p,^{\mu}\_s,f)-1}$ by $D'$.

For example, $D'$ may be a specific value (fixed value). The specific value may be, for example, 65537 or a value different from 65537.

For example, the UE may determine this $D'$, based on at least either of a parameter configured/indicated according to at least one method described in supplement 1 below and reported UE capability information.

For example, the UE may determine $D'$, based on at least one of a specific value (for example, a value other than 65537 or 65537) and the parameter.

For example, the UE may determine $D'$, based on a value obtained by subjecting the specific value to addition/subtraction/multiplication/division with the parameter.

When $D'$ is determined based on a value obtained by dividing the specific value by the parameter, a value after the decimal point may be rounded up/down. In other words, $D'$ may be defined as the output of a floor function/ceiling function for a value obtained by dividing the specific value by the parameter.

For example, the UE may decide the parameter as $D'$.

According to the second embodiment above, it is possible to derive the CCE index that can enable overlap of the resources of PDCCH candidates for a plurality of UEs.

<Variations of First/Second Embodiment>

A UE may assume/decide that embodiment 1-1/1-2/2-1/2-2/2-3 above is applicable when a specific condition is satisfied.

The specific condition may indicate at least one of the following:

- case where the UE reports UE capability indicating supporting of a multilayered PDCCH (PDCCH MIMO) with a different UE.
- case where the UE is configured/indicated with a specific parameter, based on at least one method described in supplement 1 below.

The UE may decide/determine to apply embodiment 1-1/1-2/2-1/2-2/2-3 above for each UE/each scheduling cell/each scheduled cell (cell scheduled by DCI)/each CORESET/each search space.

For example, the UE may decide/determine to apply embodiment 1-1/1-2/2-1/2-2/2-3 to a CORESET having a specific CORESET index and may decide/determine not to apply embodiment 1-1/1-2/2-1/2-2/2-3 above to other CORESETs.

The UE/base station may determine to which UE/scheduling cell/scheduled cell/CORESET/search space embodiment 1-1/1-2/2-1/2-2/2-3 above is to be applied, based on at least one of a specific predefined rule, reported UE capability, and at least one method/parameter/information/signal/channel (for example, RRC/MAC CE/DCI or the like) described in supplement 1 below.

<Third Embodiment>

A third embodiment relates to change/indication/determination of the number of CCEs, the number of PDCCHs to be monitored, and an RNTI value.

A CCE index may be determined based on at least one of the number of CCEs, the number of PDCCHs to monitor, and the RNTI value.

The number of CCEs may be determined based on the number of frequency resources (for example, the number of RBs) /number of time resources (for example, the number of symbols) of a CORESET.

The third embodiment is broadly classified into embodiments 3-1 to 3-4. A UE/base station may apply any of embodiments 3-1 to 3-4 or may apply at least two of embodiments 3-1 to 3-4 in combination.

Indication information in each embodiment below may be performed by using, for example, (a specific field/parameter included in) a MAC CE/DCI.

<<Embodiment 3-1>>

The UE may update/change/determine the RNTI value, based on received indication information.

The indication information may include, for example, at least one of the following pieces of information:

- Information indicating the value of which RNTI (for example, C-RNTI/MCS (Modulation Coding Scheme)-C-RNTI) is updated/changed/determined.

- Information/parameter indicating an updated value/changed value of the RNTI.

The UE may determine a value after update/change, based on the information/parameter indicating the updated/changed value:

For example, the UE may assume/decide that an RNTI (for example, the first RNTI described above) configured/indicated to determine a CCE index to be a PDCCH candidate is selected and the value of the RNTI is updated/-changed/determined.

For example, the UE may decide, as the value after update/change, a value obtained by subjecting an existing (present) to addition/subtraction/multiplication/division with the notified information/parameter.

In a case of determining the value after update/change, based on a value obtained by dividing the existing (present) value by the notified information/parameter, the value after the decimal point may be rounded up/down. In other words, the value after update/change may be defined as an output of the floor function/ceiling function for a value obtained by dividing the existing (present) value by the notified information/parameter.

For example, the UE may decide the value notified by the information/parameter, as the value after update/-change.

<<Embodiment 3-2>>

The UE may update/change/determine the number of PDCCHs to monitor (the number of PDCCH candidates), based on received indication information.

The number of PDCCHs to monitor (the number of PDCCH candidates) may be the number for each aggregation level.

The indication information may include, for example, at least one of the following pieces of information:

- Information indicating for which search space the number of PDCCH candidates is updated/changed/determined.
- Information indicating for which serving cell the number of PDCCH candidates is updated/changed/determined.
- Information indicating for which aggregation level the number of PDCCH candidates is updated/changed/determined.
- Information indicating for which DCI format the number of PDCCH candidates is updated/changed/determined.
- Information/parameter indicating an updated value/changed value of the number of PDCCH candidates to monitor, for each aggregation level.

For example, the UE may decide, as the value after update/change, a value obtained by subjecting an existing (present) to addition/subtraction/multiplication/division with the notified information/parameter.

In a case of determining the value after update/change, based on a value obtained by dividing the existing (present) value by the notified information/parameter, the value after the decimal point may be rounded up/down. In other words, the value after update/change may be defined as an output of the floor function/ceiling function for a value obtained by dividing the existing (present) value by the notified information/parameter.

For example, the UE may decide the value notified by the information/parameter, as the value after update/-change.

<<Embodiment 3-3>>

The UE may update/change/determine at least one of a configuration related to CORESET and a configuration related to association between CCEs and resource element groups (REGs) (CCE to REG mapping), based on received indication information.

The indication information may include, for example, at least one of the following pieces of information:

- Information indicating for which CORESET a configuration is updated/changed/determined.
- Information indicating for which serving cell the configuration of a CORESET is updated/changed/determined.
- Information/parameter indicating an updated value/changed value of the frequency resource of a CORESET.
- Information/parameter indicating an updated value/changed value of the time resource (for example, the number of symbols) of a CORESET.
- Information/parameter indicating whether or not to interleave association between CCE and REG mapping.
- Information/parameter indicating an updated value/changed value of the shiftIndex (shiftIndex ($n_{shift}$)) related to the interleave.
- Information/parameter indicating an updated/changed value of interleaver size (interleaverSize (R)).
- Information/parameter indicating an updated value/changed value of the bundle size of an REG (reg-BundleSize (L)).
- Information/parameter indicating which parameter/value to update/change.

For example, the UE may decide, as the value after update/change, a value obtained by subjecting an existing (present) to addition/subtraction/multiplication/division with the notified information/parameter.

In a case of determining the value after update/change, based on a value obtained by dividing the existing (present) value by the notified information/parameter, the value after the decimal point may be rounded up/down. In other words, the value after update/change may be defined as an output of the floor function/ceiling function for a value obtained by dividing the existing (present) value by the notified information/parameter.

For example, the UE may decide the value notified by the information/parameter, as the value after update/-change.

<<Embodiment 3-4>>

The UE may update/change/determine the mapping/association between a specific DCI field (for example, a carrier indicator field (CIF)) and a scheduled serving cell, based on received indication information.

The indication information may include, for example, at least one of the following pieces of information:

- Information indicating for which scheduling cell a configuration is updated/changed/determined.
- Information indicating for which scheduled cell a configuration is updated/changed/determined.
- Information/parameter indicating an updated value/changed value of a CIF value indicating a cell specifying DCI (for example, (UL) grant/(DL) assignment).

For example, the UE may decide, as the value after update/change, a value obtained by subjecting an existing (present) to addition/subtraction/multiplication/division with the notified information/parameter.

In a case of determining the value after update/change, based on a value obtained by dividing the existing (present) value by the notified information/parameter, the value after the decimal point may be rounded up/down. In other words, the value after update/change may be defined as an output of the floor function/ceiling function for a value obtained by dividing the existing (present) value by the notified information/parameter.

For example, the UE may decide the value notified by the information/parameter, as the value after update/-change.

Note that the same MAC CE/DCI may be used, or different MAC CEs/pieces of DCI may be used, for at least two pieces of indication information in embodiments 3-1 to 3-4 above. For example, the UE may perform update/change, based on the same MAC CE/DCI, or may perform update/change, based on different MAC CEs/pieces of DCI, for at least two of embodiments 3-1 to 3-4 above.

According to the third embodiment above, by flexibly updating/changing the number of CCEs, the number of PDCCHs to monitor, and an RNTI value, it is possible to derive a CCE index that enables overlap of the resources of PDCCH candidates for a plurality of UEs.

<Fourth Embodiment>

A fourth embodiment relates to restriction/regulation of antenna ports and restriction/regulation between a plurality of UEs.

In an existing specifications (Rel. 17 or previous versions), when a PDSCH is transmitted to a UE by using a specific antenna port, the UE may assume that another UE is using another antenna port.

In other words, the UE may assume that the antenna port orthogonal to the antenna port of a scheduled PDSCH is not associated with the PDSCH for another UE.

When a specific RRC parameter (for example, dmrs-FD-OCC-DisabledForRank1-PDSCH) is configured, and a PDSCH is scheduled by using a single DMRS port, the UE may assume that a set of orthogonal DMRS antenna ports from the same CDM group using a set of different FD-OCC parameters (for example, sequence elements, $w_f(k')$) (i.e., DMRS antenna ports made orthogonal by FD-OCC) is not associated with a PDSCH for another UE.

However, in order to improve detection accuracy in reception of a multilayered PDCCH, it is desirable that the UE performs detection for all the ports in the same CDM group. Hence, when the UE can decode X ports, it is desirable to set the number of DMRS ports of all UEs in the CDM group to which DMRSs are allocated, at X ports or less (problem 4a).

When multilayered transmission (multi-user (MU-)MIMO) is performed between a UE supporting multilayered PDCCH (PDCCH MIMO) and a UE not supporting multilayered PDCCH (PDCCH MIMO), the latter UE is particularly affected by interference (problem 4b).

Hence, methods for solving these problems 4a and 4b (embodiments 4-1 and 4-2, respectively) will be described below.

<<Embodiment 4-1>>

The UE may assume that an antenna port (remaining antenna port) orthogonal to the antenna port receiving a PDCCH is not associated with PDCCH/PDSCH transmission to another UE.

The UE may assume that a specific antenna port (remaining antenna port) orthogonal to the antenna port receiving a PDCCH is not associated with PDCCH/PDSCH transmission to another UE.

The specific antenna port may be, for example, an antenna port (remaining antenna port) orthogonal to the antenna port receiving a PDCCH, where FDM/TDM/FD-OCC/TD-OCC is not used for DMRS (or FDM/TDM/FD-OCC/TD-OCC is used for DMRS).

Note that FDM/TDM/FD-OCC/TD-OCC of DMRS will be described later.

For example, a PDSCH/PDCCH associated with the antenna port receiving the PDCCH and an orthogonal antenna port where FDM/TDM is not used for DMRS need not be transmitted to another UE.

With this configuration, for example, when PDCCH DMRSs of a plurality of UEs are multiplexed by using FD-OCC/TD-OCC, it is necessary to decode the OCC and estimate the channel of the DMRS port of another UE, whereas, when it can be assumed that the antenna port and a DMRS of another UE are FDMed/TDMed, it is not necessary to decode the OCC of the DMRS port of the other UE and perform channel estimation.

The UE may assume that a specific antenna port (remaining specific antenna port) orthogonal to the antenna port receiving a PDCCH is not associated with PDCCH/PDSCH transmission to another UE.

With this configuration, it is possible to ensure that the use of a specific antenna port is restricted, and it is possible to reduce channel estimation by a DMRS corresponding to the antenna port.

The specific antenna port may be determined based on one or more values related to at least one of the following, for example:

- Antenna port associated with a PDCCH to receive.
- Length (sequence length) of FD-OCC/TD-OCC of a DMRS.
- Parameter configured/indicated by using at least one of those described in supplement 1 below.
- Parameter reported by using UE capability information.

<<Embodiment 4-2>>

For a UE supporting MU-MIMO PDCCH (UE supporting repetition of a PDCCH using (multiple (two or more) ports/port numbers/port indices), the "other UE" in embodiment 4-1 above may be interpreted, for application, as "another UE not supporting MU-MIMO PDCCH (UE that can only receive a PDCCH using one port/port number/port index)."

For a UE not supporting MU-MIMO PDCCH (UE that can only receive a PDCCH using one port/port number/port index), the "other UE" in embodiment 4-1 above may be interpreted, for application, as "another UE supporting MU-MIMO PDCCH (UE supporting reception of a PDCCH using multiple (two or more) ports/port numbers/port indices)."

<<Embodiment 4-3>>

The application of at least one operation/restriction described in embodiment 4-1/4-2 above may be determined based on at least one of the following cases:

- Case where the UE receives a PDCCH associated with a specific antenna port.
- Case where the number of ports associated with a PDCCH to be received is a specific value.
- Case where the number of ports associated with a PDCCH to be received is larger (equal to or larger)/smaller (equal to or smaller) than a specific value.
- Case where the number of ports associated with a PDCCH (DMRS) to be received and having a relationship/not having a relationship of FDM/TDM/FD-OCC/TD-OCC is a specific number.
- Case where the number of ports associated with a PDCCH (DMRS) to be received and having a relationship/not having a relationship of FDM/TDM/FD-OCC/TD-OCC is larger (equal to or larger)/smaller (equal to or smaller) than a specific value.
- Case where a configuration is made by using higher layer signaling (RRC/MAC CE).
- Case where the UE supports/does not support specific capability.

"Having a relationship of FDM/TDM/FD-OCC/TD-OCC" may be interpreted as "being orthogonal/multiplexed by using FDM/TDM/FD-OCC/TD-OCC." Note that "not having a relationship of FDM/TDM/FD-OCC/TD-OCC" may be interpreted as "not being orthogonal/multiplexed by using FDM/TDM/FD-OCC/TD-OCC."

Note that the specific value in each of the above conditions may be determined based on at least one of a predefined rule, a parameter based on at least one method described in supplement 1 below, and a report of UE capability information.

According to the fourth embodiment, it is possible to define so as to appropriately perform PDCCH reception operation using multilayer/port.

<Fifth Embodiment>

A fifth embodiment relates to demodulation reference signals (DMRSs) of a PDCCH using multiple layers/ports.

In the present embodiment below, a case of two ports/layers will be described as a main example, but the number of layers/ports/ranks is not limited thereto. For example, more than two (for example, three, four, five, six, seven, eight, or more) ports/layers may be defined, and the present embodiment may be applied to the ports/layers.

Application of PDCCH DMRSs of the multiple ports may be configured for each SS/each CORESET/each DL BWP/each UL BWP/each CC/each UE.

Multi-port application of PDCCH DMRSs may be enabled based on one or a plurality of methods. The method may be only one of the following methods, or at least two of the following methods may be defined for switching between the methods by using higher layer signaling (RRC/MAC CE)/DCI:

- FD-OCC.
- TD-OCC.
- FD-OCC + TD-OCC.
- FDM.
- TDM.

{FD-OCC}

DMRS (PDCCH DMRS) symbols corresponding to different ports/layers may be mapped to specific time/-frequency resources.

The DMRSs may mapped in a method defined in an existing specification (Rel. 17 or previous versions) or may be mapped based on a new rule. For example, the new rule may be at least one of shifting the mapping positions of the DMRSs in the time direction and increasing/decreasing the density of the DMRSs in the frequency direction, compared to a method of an existing specification (for example, a case where a PDCCH with multiple ports/layers is not configured/indicated).

In this case, a frequency-domain (FD-)orthogonal cover code (OCC) may be applied to the DMRS symbols for each physical resource block (PRB)/precoding resource group (PRG)/control channel element (CCE)/PRG bundle size.

A different FD-OCC parameter (which may be referred to as a sequence element and the like) $W_f(k)$ may be applied to the DMRS symbol for each different port/layer.

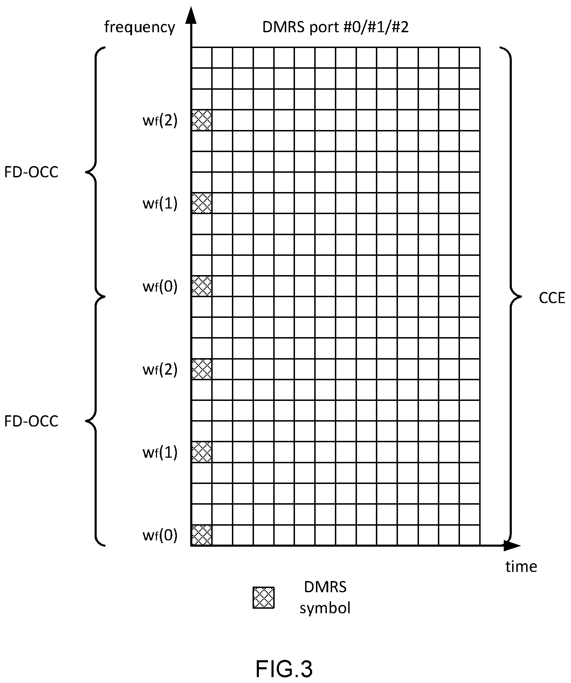

FIG. 3 is a diagram to show an example of PDCCH DMRSs to which FD-OCC is applied. FIG. 3 shows an example where a CCE is configured with 14 symbols and 2 PRBs (2 * 12 subcarriers). A grid in the time direction indicates symbols, and the grid in the frequency direction indicates subcarriers (hereinafter, this similarly applies to the drawings related to DMRSs).

In the example shown in FIG. 3, DMRSs using three ports (DMRS ports #0 to #2) are mapped to the start symbols, and FD-OCC (FD-OCC parameter $W_f(k)$) is applied for each PRB (12 subcarriers).

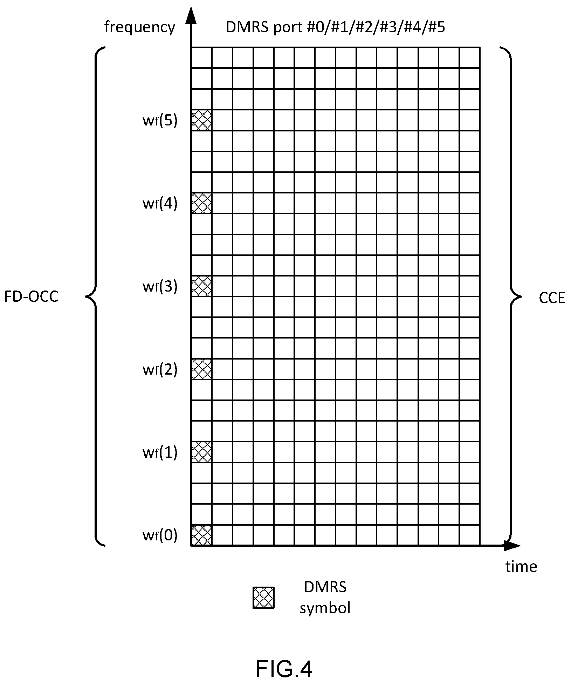

FIG. 4 is a diagram to show another example of PDCCH DMRSs to which FD-OCC is applied. In the example shown in FIG. 4, DMRSs using six ports (DMRS ports #0 to #5) are mapped to the start symbols, and FD-OCC (FD-OCC parameter $W_f(k)$) is applied for each CCE (24 subcarriers).

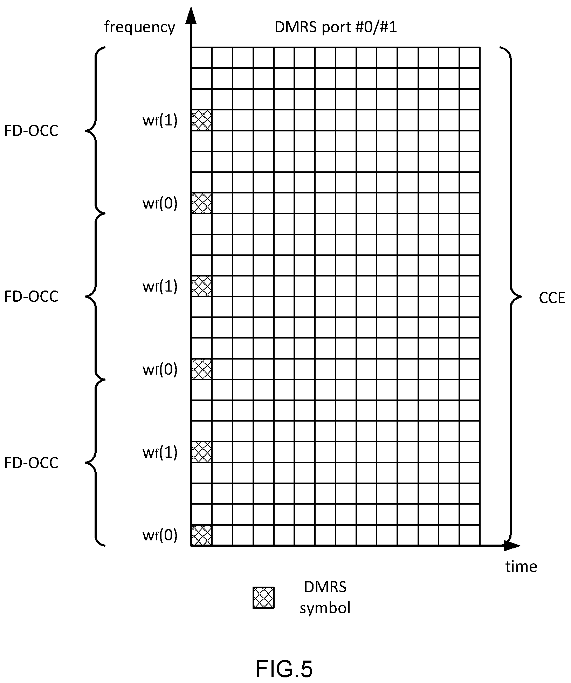

FIG. 5 is a diagram to show another example of the PDCCH DMRSs to which FD-OCC is applied. In the example shown in FIG. 5, DMRSs using two ports (DMRS ports #0 and #1) are mapped to the start symbols, and FD-OCC (FD-OCC parameter $W_f(k)$) is applied for each specific number of subcarriers (for example, 8 subcarriers).

{TD-OCC}

DMRS (PDCCH DMRS) symbols corresponding to different ports/layers may be mapped to specific time/-frequency resources.

In this case, a time-domain (TD-) OCC may be applied to the DMRS symbols in a specific time resource unit (for example, in unit of symbols).

In a case where PDCCH repetition transmission (repetition) is configured, TD-OCC may be applied for each repetition (between repetitions).

In the repetition transmission, for example, a PDCCH corresponding to the first rank/layer may be transmitted in the first repetition, and a PDCCH corresponding to the second rank/layer may be transmitted in the second repetition (this similarly applies to the third repetition and subsequent repetitions and the third rank/layer and subsequent ranks/layers). In the repetition transmission, for example, a PDCCH corresponding to multiple ranks/layers (for example, the first to n-th ranks/layers) may be transmitted in each repetition.

TD-OCC may be applied in a case where the duration in CORESET is greater than 1.

A different TD-OCC parameter (which may be referred to as a sequence element and the like) $W_t(k)$ may be applied to the DMRS symbol for each different port/layer.

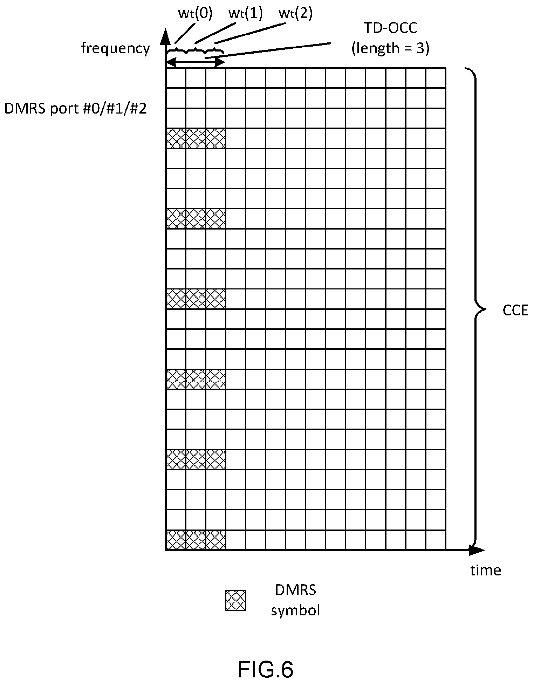

FIG. 6 is a diagram to show an example of PDCCH DMRSs to which TD-OCC is applied. In the example shown in FIG. 6, a DMRS using three ports (DMRS ports #0 to #2) is mapped over three symbols from the start symbol, and TD-OCC (TD-OCC parameter Wt(k)) having a length of 3 is applied to the DMRS symbols.

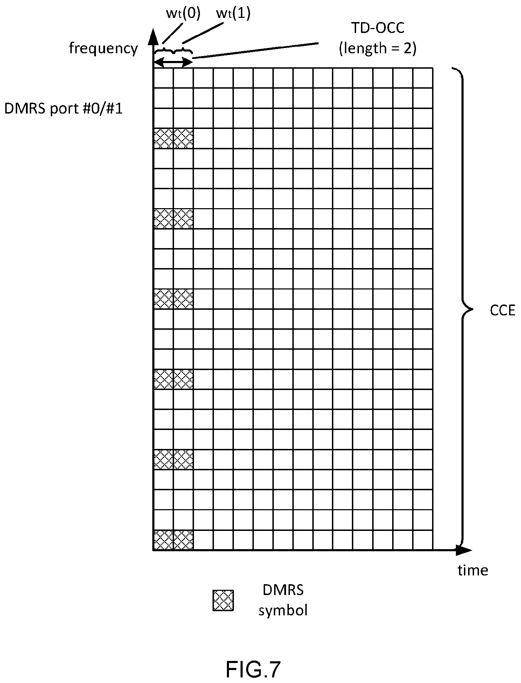

FIG. 7 is a diagram to show another example of the PDCCH DMRSs to which TD-OCC is applied. In the example shown in FIG. 7, a DMRS using two ports (DMRS ports #0 and #2) is mapped over two symbols from the start symbol, and TD-OCC (TD-OCC parameter Wt(k)) having a length of 2 is applied to the DMRS symbols.

{FD-OCC + TD-OCC}

The application of FD-OCC above and the application of TD-OCC above may be combined.

DMRS (PDCCH DMRS) symbols corresponding to different ports/layers may be mapped to specific time/-frequency resources.

In this case, a frequency-domain (FD-)orthogonal cover code (OCC) may be applied to the DMRS symbols for each physical resource block (PRB)/precoding resource group (PRG)/control channel element (CCE)/PRG bundle size.

Time-domain (TD-) OCC may also be applied to the DMRS symbols in a specific time resource unit (for example, in unit of symbols).

A different FD-OCC parameter $W_f(k)$ and a different TD-OCC parameter $W_t(k)$ may be applied to the DMRS symbol for each different port/layer.

With this configuration, the receiving side (for example, a UE) can decode a DMRS more flexibly by using either of FD-OCC and TD-OCC. For example, when delay spread of a channel is large, the characteristics of FD-OCC deteriorate, and hence the characteristics can be expected to be improved by decoding DMRSs by using TD-OCC. When the speed of the UE is high, the characteristics of TD-OCC deteriorate, and hence the characteristics can be expected to be improved by decoding a DMRS by using FD-OCC.

The UE may perform reception processing of a DMRS by using either of FD-OCC and TD-OCC, based on a specific condition. For example, the UE may decode the DMRS by using TD-OCC when a first condition is satisfied (for example, when the delay spread of the channel is large), and decode the DMRS by using FD-OCC when a second condition is satisfied (for example, when the speed of the UE is high).

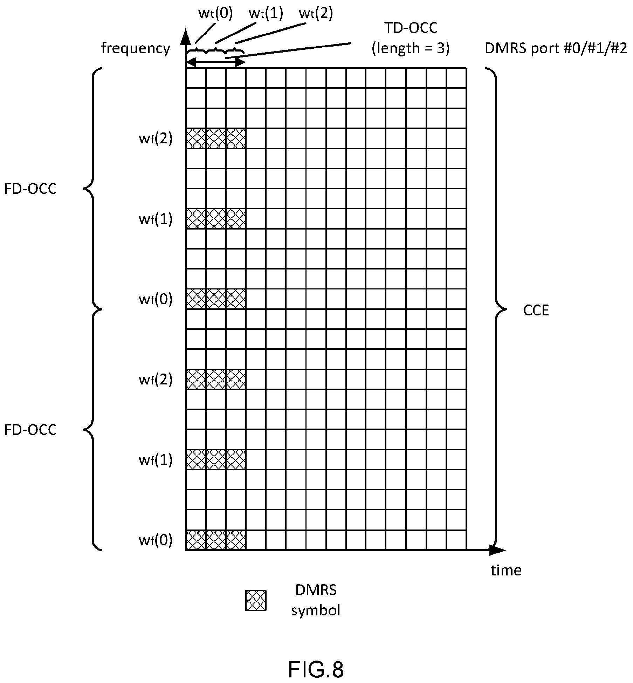

FIG. 8 is a diagram to show an example of PDCCH DMRSs to which FD-OCC and TD-OCC are applied. In the example shown in FIG. 8, a DMRS using three ports (DMRS ports #0 to #2) is mapped over three symbols from the start symbol in each specific subcarrier, and FD-OCC (FD-OCC parameter $W_f(k)$) and TD-OCC (TD-OCC parameter $W_t(k)$) having a length of 3 are each applied to the DMRS symbols for each PRB (12 subcarriers).

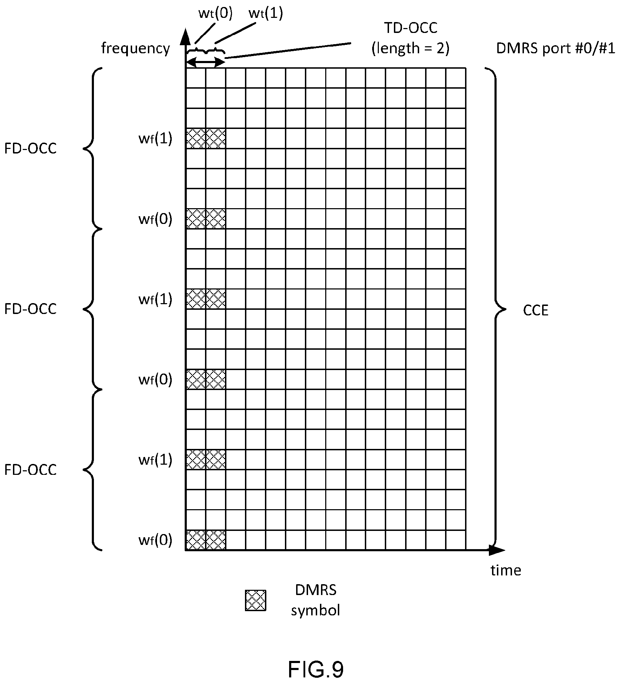

FIG. 9 is a diagram to show another example of the PDCCH DMRSs to which FD-OCC and TD-OCC are applied. In the example shown in FIG. 9, a DMRS using two ports (DMRS ports #0 and #1) is mapped over two symbols from the start symbol in each specific subcarrier, and FD-OCC (FD-OCC parameter $W_f(k)$) and TD-OCC (TD-OCC parameter $W_t(k)$) having a length of 2 are each applied to the DMRS symbols for each specific number of subcarriers (eight subcarriers).

{FDM}

DMRS (PDCCH DMRS) symbols corresponding to different ports/layers may be frequency division multiplexed (FDMed) (in the same time resource/symbol).

In this case, by some DMRSs being not transmitted, DMRS symbols corresponding to the different ports/layers may be FDMed.

For example, only a DMRS symbol corresponding to the port/layer configured for/indicated to the UE may be transmitted. A DMRS symbol corresponding to the port/layer not configured for/indicated to the UE need not be transmitted.

For example, a DMRS symbol corresponding to a given port/layer may be transmitted to a given UE, and a DMRS symbol corresponding to another port/layer may be transmitted to another UE. In this case, the given UE need not perform reception processing of the DMRS transmitted to the other UE. In other words, the given UE may ignore the DMRS transmitted to the other UE (the DMRS need not be used for channel estimation).

The UE need not assume that a PDCCH/any other DL signal is mapped to one or some resources in which no DMRS is transmitted. The UE may assume that a PDCCH/any other DL signal is not mapped to one or some resources in which no DMRS is transmitted.

The UE may assume that a PDCCH is mapped to one or some resources in which no DMRS is transmitted.

A DMRS sequence length need not change compared to a case where FDM is not used, and a DMRS symbol(s)/RE(s) with no transmission may be punctured.

With this configuration, a larger sequence length can be used compared to a case where a sequence length changes, which is preferable from a specific viewpoint.

A pseudo-random (pseudo-noise (PN)) sequence may be mapped only to a DMRS symbol(s)/RE(s) with actual transmission. In other words, the DMRS sequence length may change compared to a case where FDM is not used.

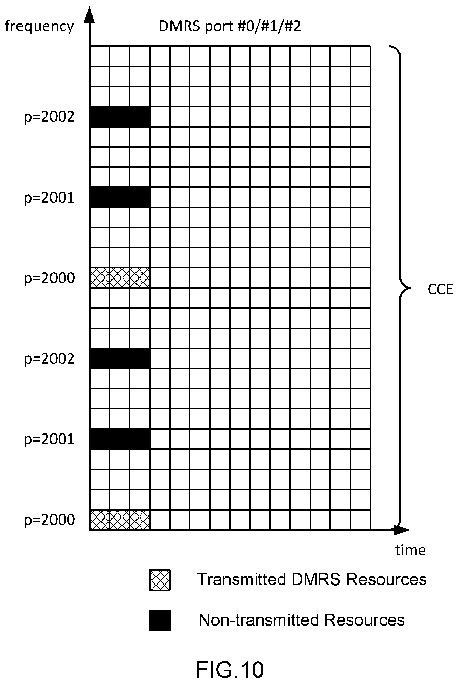

FIG. 10 is a diagram to show an example of PDCCH DMRSs to which FDM is applied. In the example shown in FIG. 10, the DMRS resources corresponding to each port (p = 2000/2001/2002) are configured to be FDMed. In this case, the DMRSs/PDCCH (resources) corresponding to p = 2001/2002 is not transmitted to the UE corresponding to p = 2000.

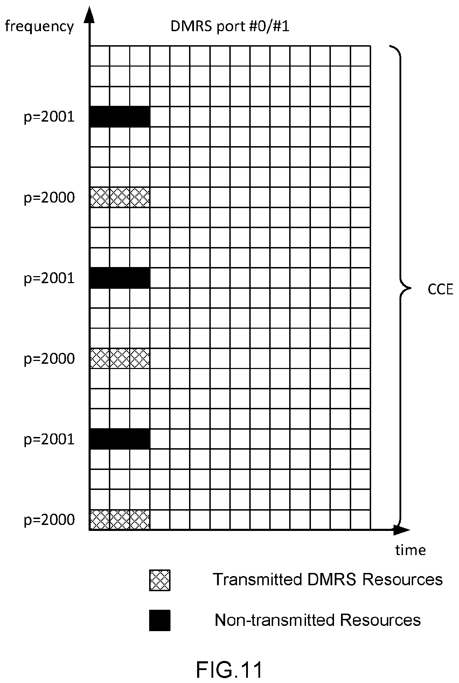

FIG. 11 is a diagram to show another example of the PDCCH DMRSs to which FDM is applied. In the example shown in FIG. 11, the DMRS resources corresponding to each port (p = 2000/2001) are configured to be FDMed. In this case, the DMRSs/PDCCH (resources) corresponding to p = 2001 are not transmitted to the UE corresponding to p = 2000.

{TDM}

DMRS (PDCCH DMRS) symbols corresponding to different ports/layers may be time division multiplexed (TDMed) (in the same time resource/symbol).

In this case, by some DMRSs being not transmitted, DMRS symbols corresponding to the different ports/layers may be TDMed.

For example, only a DMRS symbol corresponding to the port/layer configured for/indicated to the UE may be transmitted. A DMRS symbol corresponding to the port/layer not configured for/indicated to the UE need not be transmitted.

For example, a DMRS symbol corresponding to a given port/layer may be transmitted to a given UE, and a DMRS symbol corresponding to another port/layer may be transmitted to another UE. In this case, the given UE need not perform reception processing of the DMRS transmitted to the other UE. In other words, the given UE may ignore the DMRS transmitted to the other UE (the DMRS need not be used for channel estimation).

The UE need not assume that a PDCCH/any other DL signal is mapped to one or some resources in which no DMRS is transmitted. The UE may assume that a PDCCH/any other DL signal is not mapped to one or some resources in which no DMRS is transmitted.

The UE may assume that a PDCCH is mapped to one or some resources in which no DMRS is transmitted.

A DMRS sequence length need not change compared to a case where TDM is not used, and a DMRS symbol/RE with no transmission may be punctured.

With this configuration, a larger sequence length can be used compared to a case where a sequence length changes, which is preferable from a specific viewpoint.

A pseudo-random (PN) sequence may be mapped only to a DMRS symbol/RE with actual transmission. In other words, the DMRS sequence length may change compared to a case where TDM is not used.

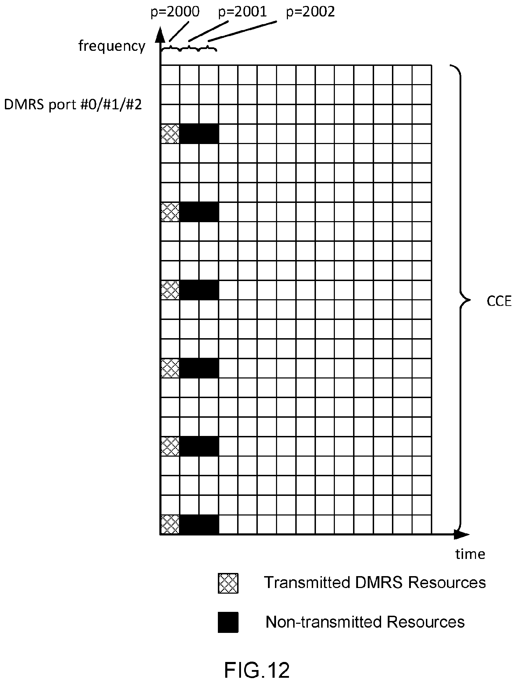

FIG. 12 is a diagram to show an example of PDCCH DMRSs to which TDM is applied. In the example shown in FIG. 12, the DMRS resources corresponding to each port (p = 2000/2001/2002) are configured to be TDMed. In this case, the DMRSs/PDCCH (resources) corresponding to p = 2001/2002 is not transmitted to the UE corresponding to p = 2000.

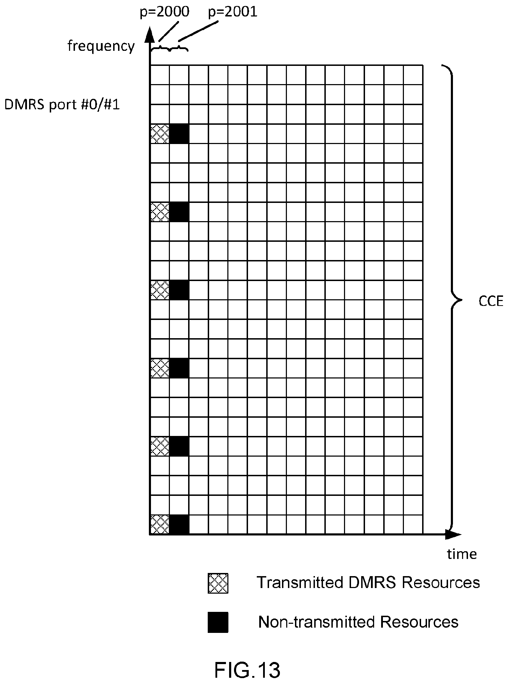

FIG. 13 is a diagram to show another example of the PDCCH DMRSs to which TDM is applied. In the example shown in FIG. 13, the DMRS resources corresponding to each port (p = 2000/2001) are configured to be TDMed. In this case, the DMRSs/PDCCH (resources) corresponding to p = 2001 are not transmitted to the UE corresponding to p = 2000.

According to the fifth embodiment, it is possible to appropriately define PDCCH DMRSs using multiple ranks/layers/ports and hence increase PDCCH capacity.

<Supplements>

{Notification of Information to UE (Supplement 1)}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semi-persistently, or aperiodically.

{Notification of Information from UE (supplement 2)}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

{Regarding Application of Each Embodiment (Supplement 3)}

At least one of the above-described embodiments may be applied to a case satisfying a specific condition. The specific condition may be defined in a standard, or a UE/BS may be notified of the specific condition by using higher layer signaling/physical layer signaling.

At least one of the above-described embodiments may be applied only to a UE that has reported a specific UE capability or that supports the specific UE capability.

The specific UE capability may indicate at least one of the following:

- Supporting of specific processing/operation/control/information (for example, PDCCH reception with multilayer/port/rank, PDCCH reception in MU-MIMO) for at least one of the above embodiments.
- Supporting of reception of PDCCH DMRSs using FD-OCC/TD-OCC/FDM/TDM.
- The number of layers/ports/ranks of PDCCH/DMRSs to support.

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. For example, the specific information may be information indicating that reception of a PDCCH using multilayer/port/rank is enabled, any RRC parameter for a specific release (for example, Rel. 18/19), or the like.

When the UE does not support at least one of the specific UE capabilities above or is not configured with the specific information, operation of Rel. 15/16 may be applied, for example.

(Supplementary Notes A)

Regarding one embodiment of the present disclosure, the following supplementary notes of the invention will be given.

{Supplementary Note A-1}

A terminal including: a control section that decides a control channel element (CCE) index corresponding to a candidate for a physical downlink control channel (PDCCH) using multiple layers, based on a first derivation method related to the CCE index, the first derivation method being different from a second derivation method related to a CCE index corresponding to a candidate for a PDCCH using one layer; and a receiving section that monitors the PDCCH using the multiple layers, based on the CCE index.

{Supplementary Note A-2}

The terminal according to supplementary note A-1, wherein a first parameter based on a slot number in the first derivation method is different from a second parameter based on a slot number in the second derivation method.

{Supplementary Note A-3}

The terminal according to supplementary note A-1 or A-2, wherein a first parameter based on a slot number in the first derivation method is determined based on a specific initial value, and the specific initial value is different from a value of a specific Radio Network Temporary Identifier (RNTI).

{Supplementary Note A-4}

The terminal according to any one of supplementary notes A-1 to A-3, wherein a first parameter based on a slot number in the first derivation method is based on a value of a specific Radio Network Temporary Identifier (RNTI), and the control section decides update of the value of the specific RNTI, based on specific indication information.

(Supplementary Notes B)

Regarding one embodiment of the present disclosure, the following supplementary notes of the invention will be given.

{Supplementary Note B-1}

A terminal including: a control section that decides a specific antenna port orthogonal to a first antenna port used for reception of a physical downlink control channel (PDCCH) with multiple layers; and a receiving section that receives the PDCCH with the multiple layers by assuming that the specific antenna port is not associated with a physical downlink shared channel (PDSCH) and a PDCCH for another specific terminal.

{Supplementary Note B-2}

The terminal according to supplementary note B-1, wherein the specific antenna port is an antenna port other than the first antenna port and orthogonal to the first antenna port.

{Supplementary Note B-3}

The terminal according to supplementary note B-1 or B-2, wherein the specific antenna port is an antenna port orthogonal to the first antenna port and using frequency division multiplexing, time division multiplexing, a frequency domain orthogonal cover code, a time domain orthogonal cover code, or frequency domain and time domain orthogonal cover codes for a demodulation reference signal of a PDCCH.

{Supplementary Note B-4}

The terminal according to any one of supplementary notes B-1 to B-3, wherein the specific other terminal is another terminal capable of receiving a PDCCH by using only one layer.

(Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

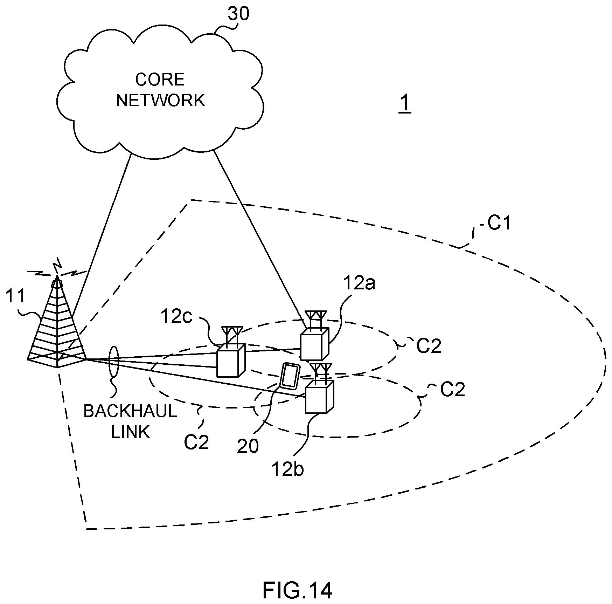

FIG. 14 is a diagram to show an example of a schematic structure of the radio communication system according to one embodiment. The radio communication system 1 (which may be simply referred to as system 1) may be a system implementing a communication using Long Term Evolution (LTE), 5th generation mobile communication system New Radio (5G NR) and so on the specifications of which have been drafted by Third Generation Partnership Project (3GPP).
The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NF), such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM), for example. Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data," and the PUSCH may be interpreted as "UL data."

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

(Base Station)

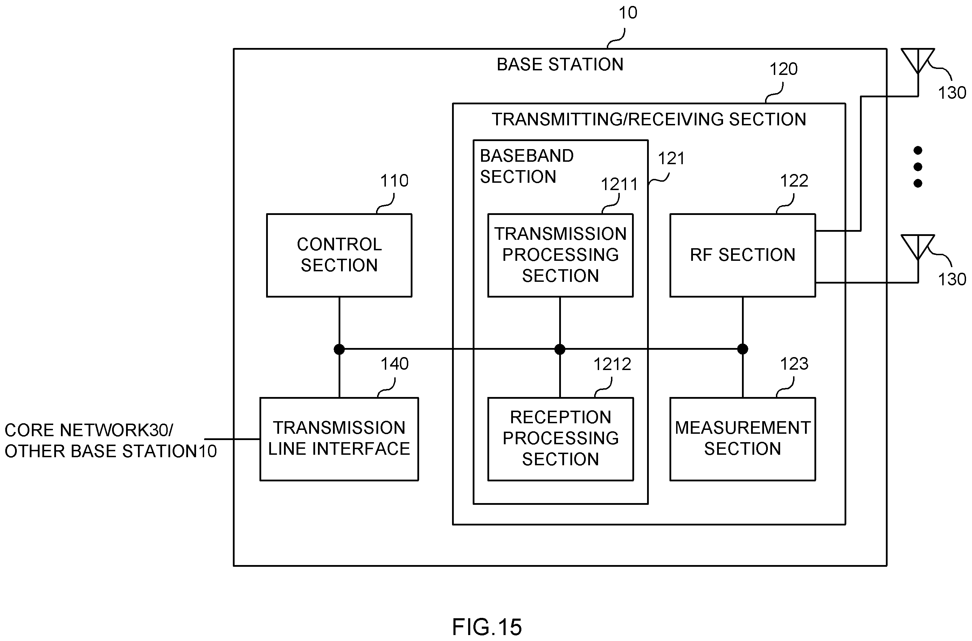

FIG. 15 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The control section 110 may indicate a control channel element (CCE) index corresponding to a candidate for a physical downlink control channel (PDCCH) using multiple layers, by using a first derivation method related to the CCE index. The first derivation method may be different from a second derivation method related to a CCE index corresponding to a candidate for a PDCCH using one layer. The transmitting/receiving section 120 may transmit the PDCCH using the multiple layers, by using the CCE index (first embodiment).

The control section 110 may indicate a specific antenna port orthogonal to the first antenna port and used for reception of a physical downlink control channel (PDCCH) with multiple layers. The transmitting/receiving section 120 may transmit the PDCCH with the multiple layers without associating the specific antenna port with a physical downlink shared channel (PDSCH) and a PDCCH for another specific terminal (fourth embodiment).

(User Terminal)

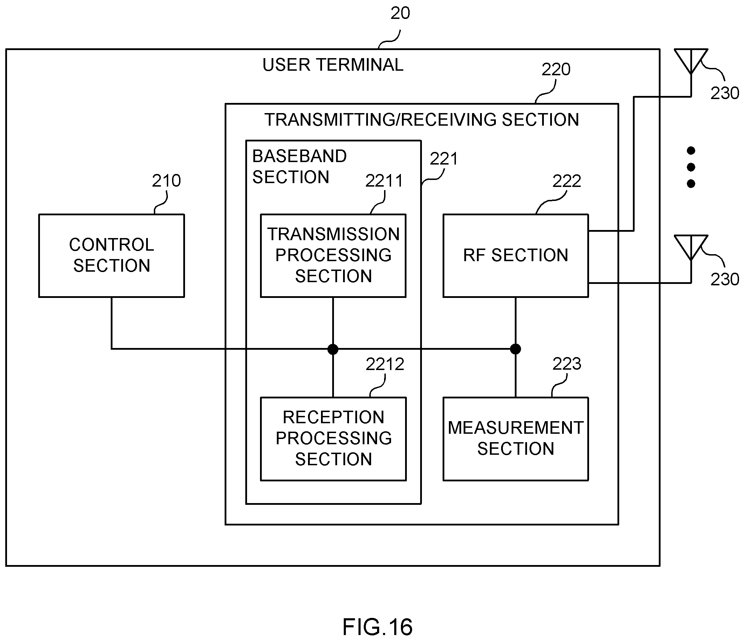

FIG. 16 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI calculation, based on a resource for channel measurement. The resource for channel measurement may be, for example, a non zero power (NZP) CSI-RS resource. The measurement section 223 may derive interference measurement for CSI calculation, based on a resource for interference measurement. The resource for interference measurement may be at least one of an NZP CSI-RS resource for interference measurement, a CSI-interference measurement (IM) resource, and the like. Note that CSI-IM may be referred to as CSI-interference management (IM), and may be interchangeably interpreted as zero power (ZP) CSI-RS. Note that, in the present disclosure, the CSI-RS, the NZP CSI-RS, the ZP CSI-RS, the CSI-IM, a CSI-SSB, and the like may be interchangeably interpreted.

Note that the transmitting section and the receiving section of the user terminal 20 in the present disclosure may be constituted with at least one of the transmitting/receiving section 220 and the transmitting/receiving antennas 230.

The control section 210 may decide a control channel element (CCE) index corresponding to a candidate for a physical downlink control channel (PDCCH) using multiple layers, based on a first derivation method related to the CCE index. The first derivation method may be different from a second derivation method related to a CCE index corresponding to a candidate for a PDCCH using one layer. The transmitting/receiving section 220 may monitor the PDCCH using the multiple layers, by using the CCE index.

A first parameter based on a slot number in the first derivation method may be different from a second parameter based on a slot number in the second derivation method (first embodiment).

A first parameter based on a slot number in the first derivation method may be determined based on a specific initial value. The specific initial value may be different from a value of a specific Radio Network Temporary Identifier (RNTI) (second embodiment).

A first parameter based on a slot number in the first derivation method may be based on a value of a specific Radio Network Temporary Identifier (RNTI). The control section 210 may decide update of the value of the specific RNTI, based on specific indication information (third embodiment).

The control section 210 may decide a specific antenna port orthogonal to the first antenna port and used for reception of a physical downlink control channel (PDCCH) with multiple layers. The transmitting/receiving section 220 may receive the PDCCH with the multiple layers by assuming that the specific antenna port is not associated with a physical downlink shared channel (PDSCH) and a PDCCH for another specific terminal (fourth embodiment).

The specific antenna port may be an antenna port other than the first antenna port and orthogonal to the first antenna port (fourth embodiment).

The specific antenna port may be an antenna port orthogonal to the first antenna port and using frequency division multiplexing, time division multiplexing, a frequency domain orthogonal cover code, a time domain orthogonal cover code, or frequency domain and time domain orthogonal cover codes for a demodulation reference signal of a PDCCH (fourth embodiment).

The specific other terminal may be another terminal capable of receiving a PDCCH by using only one layer (fourth embodiment).

(Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

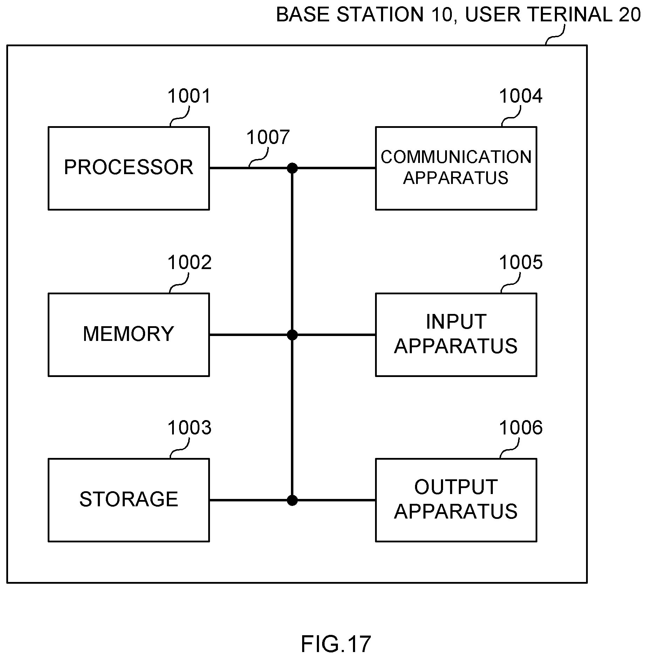

For example, a base station, a user terminal, and so on according to one embodiment of the present disclosure may function as a computer that executes the processes of the radio communication method of the present disclosure. FIG. 17 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

(Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

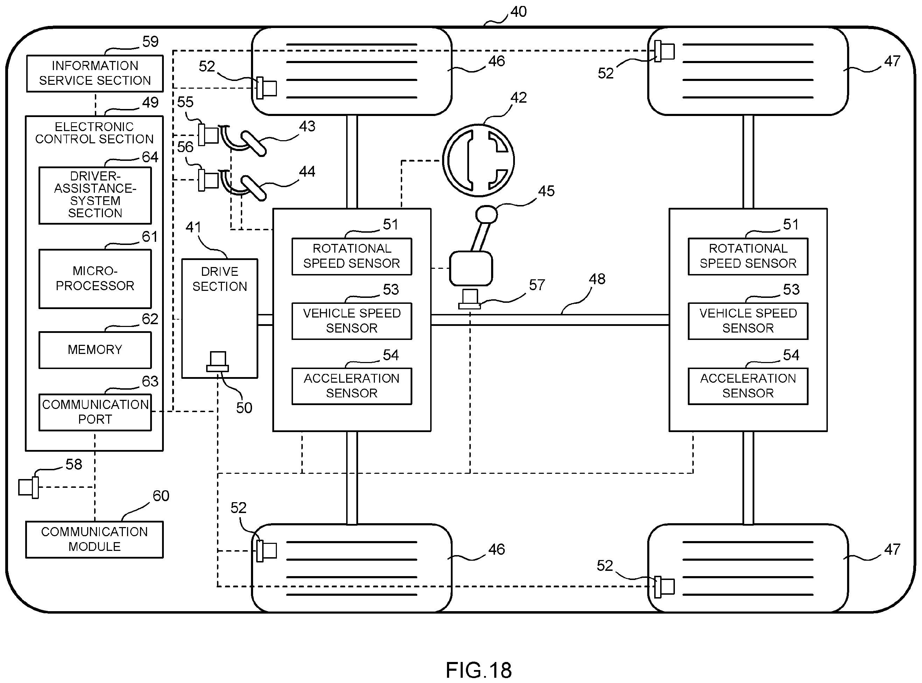

FIG. 18 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a to-infinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

**Claims**

**1.** A terminal comprising:

a control section that decides a control channel element (CCE) index corresponding to a candidate for a physical downlink control channel (PDCCH) using multiple layers, based on a first derivation method related to the CCE index, the first derivation method being different from a second derivation method related to a CCE index corresponding to a candidate for a PDCCH using one layer; and
a receiving section that monitors the PDCCH using the multiple layers, based on the CCE index.

2. The terminal according to claim 1, wherein
a first parameter based on a slot number in the first derivation method is different from a second parameter based on a slot number in the second derivation method.

3. The terminal according to claim 1, wherein

a first parameter based on a slot number in the first derivation method is determined based on a specific initial value, and
the specific initial value is different from a value of a specific Radio Network Temporary Identifier (RNTI).

4. The terminal according to claim 1, wherein

a first parameter based on a slot number in the first derivation method is based on a value of a specific Radio Network Temporary Identifier (RNTI), and
the control section decides update of the value of the specific RNTI, based on specific indication information.

5. A radio communication method for a terminal, the radio communication method comprising:

deciding a control channel element (CCE) index corresponding to a candidate for a physical downlink control channel (PDCCH) using multiple layers, based on a first derivation method related to the CCE index, the first derivation method being different from a second derivation method related to a CCE index corresponding to a candidate for a PDCCH using one layer; and
monitoring the PDCCH using the multiple layers, based on the CCE index.

6. A base station comprising:

a control section that indicates a control channel element (CCE) index corresponding to a candidate for a physical downlink control channel (PDCCH) using multiple layers, by using a first derivation method related to the CCE index, the first derivation method being different from a second derivation method related to a CCE index corresponding to a candidate for a PDCCH using one layer; and
a transmitting section that transmits the PDCCH using the multiple layers, by using the CCE index.

## FIG.1A

| MCS | PDCCH | PDSCH | PUSCH |
|---|---|---|---|
| 0 | 24RB<br>-> 11UE/symbol | 11RB(for pattern 1)<br>12RB(for pattern 2)<br>-> 22-24UE/symbol | 10RB<br>-> 27UE/symbol |
| 5 | 12RB<br>-> 22UE/symbol | 4RB(for pattern 1/2)<br>-> 68UE/symbol | 3RB<br>-> 91UE/symbol |

## FIG.1B

| MCS | PDCCH | PDSCH | PUSCH |
|---|---|---|---|
| 0 | PDCCH 1symbol<br>-> 392DCI(Common to DL/UL)<br>PDCCH 2symbol<br>-> 784DCI(Common to DL/UL) | 11RB(for pattern 1)<br>-> 672UE<br>12RB(for pattern 2)<br>-> 616UE | 10RB<br>-> 216UE |
| 5 | PDCCH 1symbol<br>-> 784DCI(Common to DL/UL)<br>PDCCH 2symbol<br>-> 1568DCI(Common to DL/UL) | 4RB<br>-> 1904UE | 3RB<br>-> 728UE |

EP 4 765 979 A1

## FIG.2A

frequency

SS#1  SS#2  SS#1

time

PDCCH candidate for UE#1

PDCCH candidate for UE#2

## FIG.2B

frequency

SS#1  SS#2  SS#1

time

PDCCH candidate for UE#1

PDCCH candidate for UE#2

FIG.3

FIG.4

FIG.5

EP 4 765 979 A1

FIG.6

FIG.7

FIG.8

FIG.9

FIG.10

FIG.11

FIG.12

FIG.13

FIG.14

FIG.15

EP 4 765 979 A1

FIG.16

BASE STATION 10, USER TERINAL 20

1001

PROCESSOR

1007

1004

COMMUNICATION APPARATUS

1002

MEMORY

1005

INPUT APPARATUS

1003

STORAGE

1006

OUTPUT APPARATUS

FIG.17

FIG.18

- 40
- 47
- 52
- 51 ROTATIONAL SPEED SENSOR
- 53 VEHICLE SPEED SENSOR
- 54 ACCELERATION SENSOR
- 48
- 45
- 42
- 57
- 46
- 51 ROTATIONAL SPEED SENSOR
- 53 VEHICLE SPEED SENSOR
- 54 ACCELERATION SENSOR
- 43
- 44
- 52
- 55
- 56
- 41 DRIVE SECTION
- 50
- 59 INFORMATION SERVICE SECTION
- 49 ELECTRONIC CONTROL SECTION
- 64 DRIVER-ASSISTANCE-SYSTEM SECTION
- 61 MICRO-PROCESSOR
- 62 MEMORY
- 63 COMMUNICATION PORT
- 58
- 60 COMMUNICATION MODULE

# EP 4 765 979 A1

## INTERNATIONAL SEARCH REPORT

International application No.

**PCT/JP2023/029894**

### A. CLASSIFICATION OF SUBJECT MATTER

*H04W 72/0453*(2023.01)i; *H04W 16/28*(2009.01)i; *H04W 72/20*(2023.01)i
FI: H04W72/0453; H04W72/20; H04W16/28 130

According to International Patent Classification (IPC) or to both national classification and IPC

### B. FIELDS SEARCHED

Minimum documentation searched (classification system followed by classification symbols)

H04W72/0453; H04W16/28; H04W72/20

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2019/107239 A1 (NTT DOCOMO, INC.) 06 June 2019 (2019-06-06)<br>paragraph [0070] | 1-6 |
| A | US 2021/0160827 A1 (SAMSUNG ELECTRONICS CO., LTD.) 27 May 2021 (2021-05-27)<br>paragraphs [0106]-[0117] | 1-6 |
| A | CMCC. Discussion on multi-cell PUSCH/PDSCH scheduling with a single DCI [online].<br>3GPP TSG RAN WG1 #110b-e R1-2209352. 30 September 2022<br>section 2.2.2 | 1-6 |

☐ Further documents are listed in the continuation of Box C.　　☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **22 January 2024** | **30 January 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2023/029894**

| Patent document cited in search report | Publication date (day/month/year) | Patent family member(s) | Publication date (day/month/year) |
|---|---|---|---|
| WO 2019/107239 A1 | 06 June 2019 | US 2020/0359405 A1 paragraph [0081] EP 3720213 A1 CN 111434166 A | |
| US 2021/0160827 A1 | 27 May 2021 | WO 2021/101088 A1 KR 10-2021-0063027 A | |

Form PCT/ISA/210 (patent family annex) (July 2022)

**REFERENCES CITED IN THE DESCRIPTION**

**Non-patent literature cited in the description**

- Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0*, April 2010